(19) Europäisches Patentamt

European Patent Office

Office européen des brevets

(11) **EP 4 614 422 A1**

(12) **EUROPEAN PATENT APPLICATION**

(43) Date of publication:
**10.09.2025 Bulletin 2025/37**

(21) Application number: **24189726.3**

(22) Date of filing: **19.07.2024**

(51) International Patent Classification (IPC):
**G06Q 30/0283** (2023.01) **G06F 3/12** (2006.01)

(52) Cooperative Patent Classification (CPC):
**G06Q 30/0283; G06F 3/1273; G06F 3/1285;**
G06F 3/1218; G06F 3/1294; G06F 2206/1504

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2024 JP 2024035880**

(71) Applicant: **FUJIFILM Business Innovation Corp.
Minato-ku
Tokyo (JP)**

(72) Inventors:
• **YONEDA, Shigeru**
  **Yokohama-shi, Kanagawa (JP)**
• **SASAKI, Kimihiko**
  **Yokohama-shi, Kanagawa (JP)**
• **SAKAKURA, Keita**
  **Yokohama-shi, Kanagawa (JP)**
• **MIZUNO, Katsuya**
  **Yokohama-shi, Kanagawa (JP)**

(74) Representative: **Kurig, Thomas
Becker Kurig & Partner
Patentanwälte mbB
Bavariastraße 7
80336 München (DE)**

(54) **INFORMATION PROCESSING SYSTEM, INFORMATION PROCESSING PROGRAM, AND INFORMATION PROCESSING METHOD**

(57) An information processing system includes a processor configured to, in a case where order reception information related to printing, that is, the order reception information including print job information and printed matter type information is input, input new order reception information related to new printing to a trained model which has been trained in advance in order to output cost information indicating costs regarding the printing, thereby outputting new cost information regarding printing corresponding to the new order reception information.

EP 4 614 422 A1

**Description**

BACKGROUND OF THE INVENTION

(i) Field of the Invention

The present disclosure relates to an information processing system, an information processing program, and an information processing method.

(ii) Description of Related Art

JP2021-26535A discloses a printing order placing system, which places an order for printing to a factory, the printing order placing system specifying a type of paper used in the factory and the amount of used paper based on information collected from the factory in the order placement destination, and transmitting the specified paper type and the amount of paper to a supply source of the used paper.

SUMMARY OF THE INVENTION

In a case where an estimated amount is presented in advance to a customer in a printing factory in consideration of cost information of a printed matter, there is a case where the cost information is inaccurate, which may reduce the profit of the printing factory or result in a deficit. In addition, in a case where the estimated amount based on the extremely high cost information with too much margin is presented, the order may be lost.
As a factor that causes the cost information to be inaccurate, mostly, the cost of the printed matter may be unclear in advance. For example, in the calculation of the cost of the resources used for the printed matter, the calculation of the reprinted matter is not clear in advance. In addition, the calculation of the reprinted matter may be determined by a rough estimate based on a craftsman's sense, and there may be a situation where accuracy and reproducibility are not guaranteed.
Therefore, an object of the present disclosure is to provide an information processing system, an information processing program, and an information processing method capable of predicting cost information to be estimated in a case of order reception without relying on sense.
In order to achieve the above object, according to a first aspect of the present disclosure, there is provided an information processing system including a processor configured, in a case where order reception information related to printing, that is, the order reception information including print job information and printed matter type information is input, to input new order reception information related to new printing to a trained model which has been trained in advance in order to output cost information indicating costs regarding the printing, thereby outputting new cost information regarding printing corresponding to the new order reception information.
According to a second aspect of the present disclosure, in the information processing system according to the first aspect, the order reception information and the new order reception information may further include a consumable usage amount in the printing.
According to a third aspect of the present disclosure, in the information processing system according to the first or second aspect, the order reception information and the new order reception information may further include order reaction information with respect to printing in past order reception.
According to a fourth aspect of the present disclosure, in the information processing system according to any one of the first to third aspects, the order reception information and the new order reception information may further include information related to atmosphere in the case of printing.
According to a fifth aspect of the present disclosure, in the information processing system according to any one of the first to fourth aspects, the order reception information and the new order reception information may further include an operation situation of a printing apparatus used for the printing.
According to a sixth aspect of the present disclosure, in the information processing system according to any one of the first to fifth aspects, the order reception information and the new order reception information may further include worker information related to the printing.
According to a seventh aspect of the present disclosure, in the information processing system according to any one of the first to sixth aspects, the order reception information and the new order reception information may further include outsourcing destination information related to the printing.
According to an eighth aspect of the present disclosure, in the information processing system according to any one of the first to seventh aspects, the order reception information and the new order reception information may further include imposition information in the case of printing.
According to a ninth aspect of the present disclosure, in the information processing system according to any one of the first to eighth aspects, the order reception information and the new order reception information may further include a defect ratio in the printing.

According to a tenth aspect of the present disclosure, there is provided an information processing program causing a computer to execute a process including, in a case where order reception information related to printing, that is, the order reception information including print job information and printed matter type information is input, inputting new order reception information related to new printing to a trained model which has been trained in advance in order to output cost information indicating costs regarding the printing, thereby outputting new cost information regarding printing corresponding to the new order reception information.

According to an eleventh aspect of the present disclosure, there is provided an information processing method including, in a case where order reception information related to printing, that is, the order reception information including print job information and printed matter type information is input, inputting new order reception information related to new printing to a trained model which has been trained in advance in order to output cost information indicating costs regarding the printing, thereby outputting new cost information regarding printing corresponding to the new order reception information.

According to the first aspect, it is possible to predict the cost information estimated in a case of the order reception without relying on sense.

According to the second aspect, it is possible to predict the cost information based on the consumable usage amount.

According to the third aspect, it is possible to predict the cost information based on the order reaction information with respect to printing in the past order reception.

According to the fourth aspect, it is possible to predict the cost information based on the information related to atmosphere in the case of printing.

According to the fifth aspect, it is possible to predict the cost information based on the operation situation of the printing apparatus.

According to the sixth aspect, it is possible to predict the cost information based on the worker information related to the printing.

According to the seventh aspect, it is possible to predict the cost information based on the outsourcing destination information related to the printing.

According to the eighth aspect, it is possible to predict the cost information based on the imposition information in the case of printing.

According to the ninth aspect, it is possible to predict the cost information based on the defect ratio in the printing.

According to the tenth aspect, it is possible to predict the cost information estimated in a case of the order reception without relying on sense.

According to the eleventh aspect, it is possible to predict the cost information estimated in a case of the order reception without relying on sense.

BRIEF DESCRIPTION OF THE DRAWINGS

Exemplary embodiment(s) of the present invention will be described in detail based on the following figures, wherein:

Fig. 1 is a diagram showing a schematic configuration of an information processing system according to the present exemplary embodiment;
Fig. 2 is a block diagram showing a main configuration of electrical systems of a printing apparatus in the information processing system according to the present exemplary embodiment;
Fig. 3 is a block diagram showing a main configuration of electric systems of a management apparatus and a client computer in the information processing system according to the present exemplary embodiment;
Fig. 4 is a functional block diagram showing a functional configuration of the client computer in the information processing system according to the present exemplary embodiment;
Fig. 5 is a diagram showing an example of imposed paper;
Fig. 6 is a diagram showing an example of a trained neural network model;
Fig. 7 is a flowchart showing an example of a flow of a training process performed by the client computer of the information processing system according to the present exemplary embodiment; and
Fig. 8 is a flowchart showing an example of a flow of an estimation process performed by the client computer of the information processing system according to the present exemplary embodiment.

DETAILED DESCRIPTION OF THE INVENTION

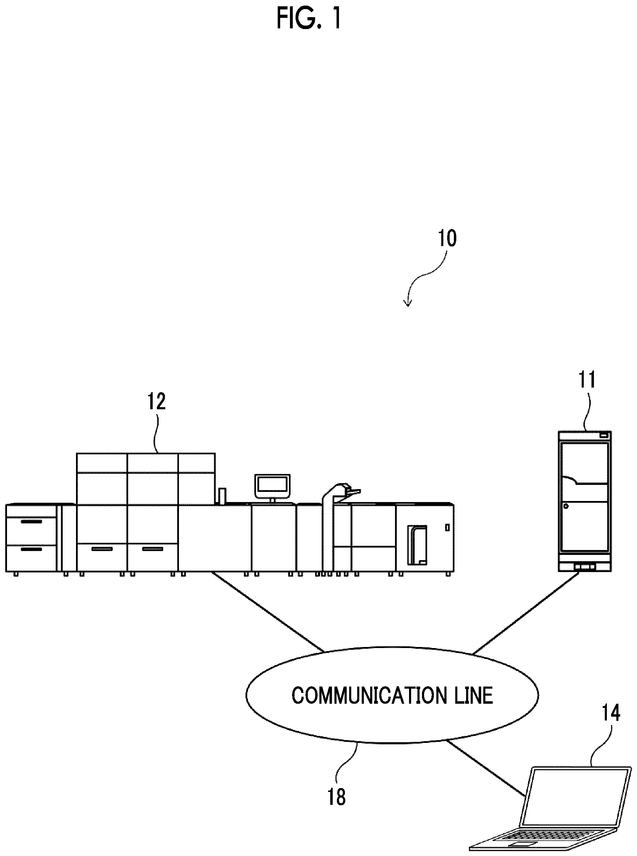

Hereinafter, an example of the present exemplary embodiment will be described in detail with reference to the drawings. In the present exemplary embodiment, an information processing system in which a management apparatus, a printing apparatus, a client computer, and the like are connected to each other via a communication line such as various networks is described as an example. Fig. 1 is a diagram showing a schematic configuration of an information processing system 10 according to the present exemplary embodiment.

As illustrated in Fig. 1, an information processing system 10 according to the present exemplary embodiment includes a management apparatus 11, a printing apparatus 12, a client computer 14, and the like. The management apparatus 11, the printing apparatus 12, and the client computer 14 are connected to each other via a communication line 18 such as a Local Area Network (LAN), a Wide Area Network (WAN), the Internet, and an intranet. Then, each of the management apparatus 11, the printing apparatus 12, and the client computer 14 can transmit and receive various data to and from each other via the communication line 18. In the present exemplary embodiment, by giving a print instruction to the printing apparatus 12 from the client computer 14 via the management apparatus 11, an image corresponding to the print instruction is formed in the printing apparatus 12.

In Fig. 1, one management apparatus 11, one printing apparatus 12, and one client computer 14 are shown, but each of the apparatuses may be plural or any of the apparatuses may be plural.

The printing apparatus 12 according to the present exemplary embodiment has a plurality of functions such as a printing function of performing printing process and a post-processing function of performing post-process on paper on which an image is formed. The plurality of functions may include a scanning function of scanning a manuscript to obtain image information indicating the manuscript, a duplicating function of duplicating an image recorded in the manuscript on paper, a facsimile function of transmitting and receiving various data via a telephone line (not shown), a transfer function of transferring manuscript information such as the image information scanned by the scanning function, and an accumulating function of accumulating the manuscript information such as the scanned image information.

In the following description, the facsimile function may be referred to as a facsimile, the reading function may be referred to as a scan, the printing function may be referred to as a print, and the duplicating function may be referred to as a copy.

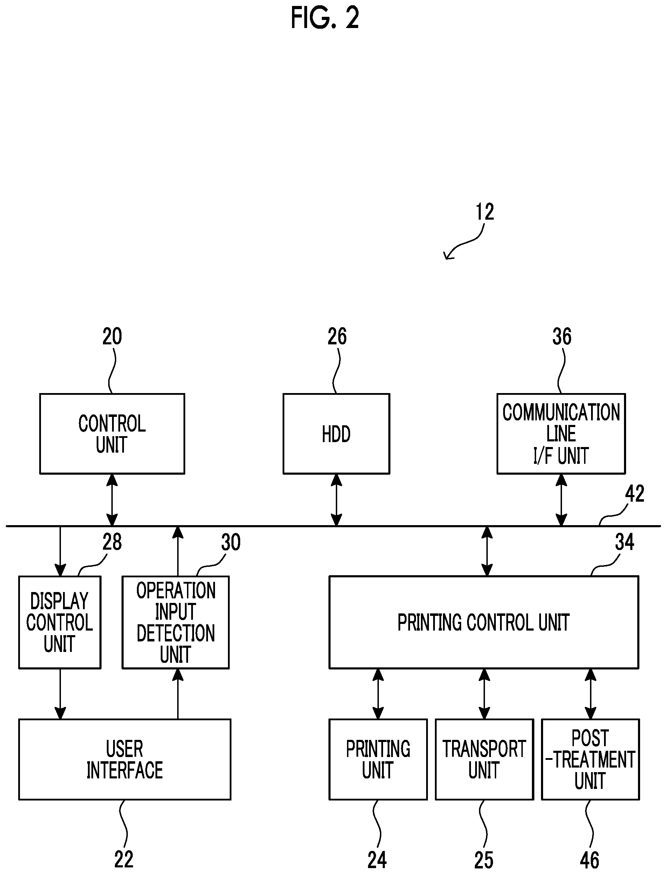

Fig. 2 is a block diagram showing a main configuration of electric systems of the printing apparatus 12 in the information processing system 10 according to the present exemplary embodiment.

As shown in Fig. 2, the printing apparatus 12 according to the present exemplary embodiment includes a control unit 20. The control unit 20 may include a Central Processing Unit (CPU), a Read Only Memory (ROM), and a Random Access Memory (RAM).

On the other hand, the printing apparatus 12 according to the present exemplary embodiment includes a Hard Disk Drive (HDD) 26 that stores various data, application programs, and the like. In addition, the printing apparatus 12 includes a display control unit 28 that is connected to a user interface 22 and controls the display of various operation screens and the like on the display of the user interface 22. Further, the printing apparatus 12 includes an operation input detection unit 30 that is connected to the user interface 22 and detects an operation instruction input via the user interface 22. In the printing apparatus 12, the HDD 26, the display control unit 28, and the operation input detection unit 30 are electrically connected to a system bus 42. In the printing apparatus 12 according to the present exemplary embodiment, the HDD 26 is applied as a storage unit, but the present disclosure is not limited thereto, and a non-volatile storage unit such as a flash memory may be applied. In addition, in the present exemplary embodiment, a touch panel that can perform display and operation input is applied to the user interface 22, but the present disclosure is not limited thereto, and a user interface in which a display and an operation unit are separate may be applied.

In addition, the printing apparatus 12 according to the present exemplary embodiment includes a printing control unit 34 that controls the printing process by the printing unit 24, the transport of the paper to the printing unit 24 by the transport unit 25, and the post-treatment by the post-treatment unit 46. The printing apparatus 12 may include a reading control unit that controls an optical image scanning operation by a manuscript reading unit and a manuscript feeding operation by a manuscript transport unit. In addition, the printing apparatus 12 includes a communication line interface (I/F) unit 36 that is connected to the communication line 18 and transmits and receives communication data to and from other external apparatuses such as the client computer 14 connected to the communication line 18. Further, the printing apparatus 12 may include a facsimile interface (I/F) unit that is connected to a telephone line (not shown) and transmits and receives facsimile data to and from a facsimile apparatus connected to the telephone line. In addition, the printing apparatus 12 may include a transmission and reception control unit that controls transmission and reception of the facsimile data via the facsimile I/F unit 38. Moreover, in the printing apparatus 12, the printing control unit 34 and the communication line I/F unit 36 are electrically connected to a system bus 42.

With the above configuration, the printing apparatus 12 according to the present exemplary embodiment executes control of display of an operation screen and information, such as various messages, on the display of the user interface 22 via the display control unit 28 by the control unit 20. In addition, the printing apparatus 12 executes, by the control unit 20, each of the control of the operation of the printing unit 24, the transport unit 25, and the post-treatment unit 46 via the printing control unit 34, and the control of the transmission and reception of the communication data via the communication line I/F unit 36. Further, the printing apparatus 12 grasps operation content in the user interface 22 based on operation information, which is detected by the operation input detection unit 30, by the control unit 20 and executes various controls based on the operation content.

As an example of the applications stored in the HDD 26, in the present exemplary embodiment, an application that executes a function such as printing is included.

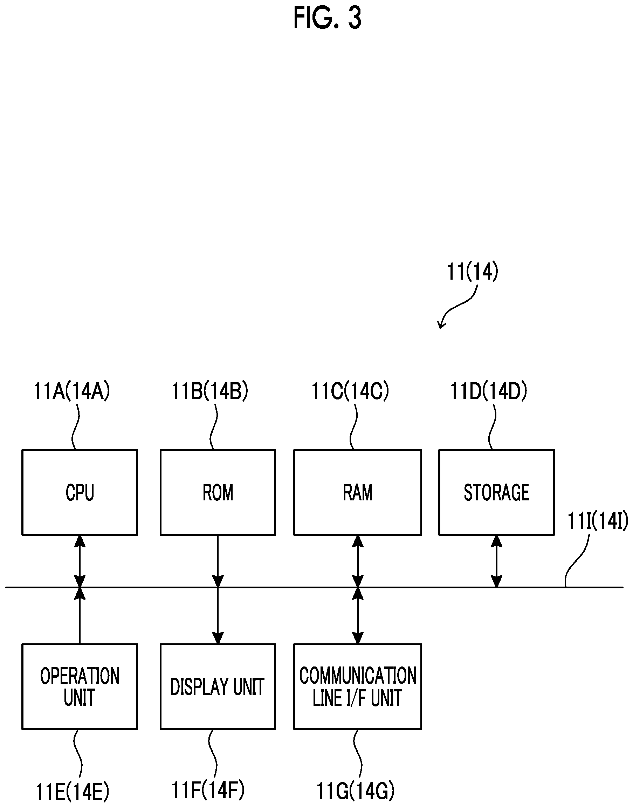

Subsequently, a main configuration of the electric systems of the management apparatus 11 and the client computer 14 according to the present exemplary embodiment will be described. Fig. 3 is a block diagram showing the main configuration of the electric systems of the management apparatus 11 and the client computer 14 in the information processing system 10 according to the present exemplary embodiment. Since the management apparatus 11 and the client computer 14 have a general computer configuration, the management apparatus 11 will be described below as a representative example.

As illustrated in Fig. 3, the management apparatus 11 according to the present exemplary embodiment includes a CPU 11A as an example of a processor, a ROM 11B, a RAM 11C, a storage 11D, an operation unit 11E, a display unit 11F, and a communication line interface (I/F) unit 11G. The CPU 11A controls the whole operation of the management apparatus 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used for display of the various types of information. The communication line I/F unit 11G is connected to the communication line 18 and transmits and receives various data to and from other apparatuses connected to the communication line 18. In addition, the communication line I/F unit 11G may have a configuration capable of directly communicating with each device by using various well-known wireless communications. Each of the units of the management apparatus 11 described above is electrically connected to each other by a system bus 11I. In the management apparatus 11 according to the present exemplary embodiment, the storage 11D is applied as a storage unit, but as an example of the storage, a non-volatile storage unit, such as a Hard Disk Drive (HDD) or a flash memory, is applied.

With such a configuration, in the management apparatus 11 according to the present exemplary embodiment, the CPU 11A executes accesses to the ROM 11B, the RAM 11C, and the storage 11D, acquisition of various types of data via the operation unit 11E, and display of various types of information on the display unit 11F. In addition, the management apparatus 11 executes control of transmission and reception of the communication data via the communication line I/F unit 11G by the CPU 11A.

In the information processing system 10 having the above-described configuration, the management apparatus 11 manages a series of manufacturing procedures. The series of manufacturing procedures includes, for example, a manufacturing procedure, a pre-press procedure, a plate-making procedure, a printing procedure, a processing procedure, and a distribution procedure.

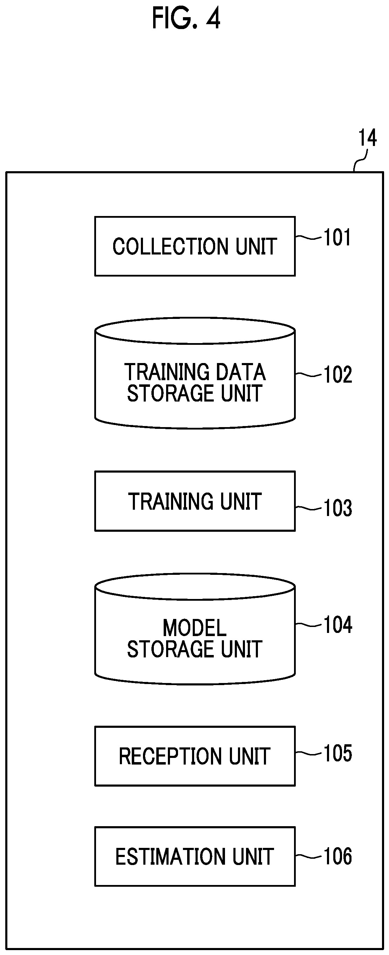

Next, a functional configuration of the client computer 14 will be described. Fig. 4 is a block diagram showing an example of the functional configuration of the client computer 14.

Functionally, as shown in Fig. 4, the client computer 14 is configured to include a collection unit 101, a training data storage unit 102, a training unit 103, a model storage unit 104, a reception unit 105, and an estimation unit 106.

The collection unit 101 collects training data including a pair of past order reception information related to printing and cost information corresponding to the order reception information.

The order reception information may include print job information and a printed matter type. Specifically, the print job information includes print data (a Page Description Language (PDL), such as PDF, BMP, or the like), and the number of sheets. In addition, the print job information may include information indicating a deadline, a paper type, and whether or not to use a special color material (toner or ink). The printed matter type includes, for example, a photo book, a poster, a magazine, a flyer, an envelope, a business card, a catalog, a newspaper, and the like. A printing method (for example, offset printing used for a large number of identical printed matter, digital printing appropriate for small-scale printing) is classified according to the printed matter type and the number of sheets, and the management apparatus 11 manages the printing method classified in this way, and has print schedule information. The collection unit 101 collects the print job information and the printed matter type in the past order from the schedule information included in the management apparatus 11.

In addition, the order reception information may include order reaction information with respect to printing in past order reception. Specifically, the order reaction information includes information indicating, for example, whether a customer demands a strict request, whether a reprint request has been made in a past order reception, and the like.

The collection unit 101 acquires the order reaction information from order reception and placement history information included in the management apparatus 11.

In addition, the order reception information may include a consumable usage amount in printing, an operation situation of the printing apparatus 12 used in printing, worker information related to printing, outsourcing destination information related to printing, imposition information in a case of printing, and a defect ratio in printing.

Specifically, the consumables include paper, ink, a discarded toner bottle, a binding member (for example, a stapler cartridge or a laminator), and the like, and the consumable usage amount includes not only the usage amount of paper, ink, a binding member, and the like but also the consumable usage amount used in a portion that does not become a product such as offset paper passing amount and paper or ink for color matching or alignment adjustment. In addition, the usage amount of the transfer drum unit, the fixing unit, the cutter, the hole cutter, and the like, which are replacement components, may be included as the consumable usage amount.

In a case of performing printing, for example, in a continuous printing machine, waste paper (disposable paper) is generated in a case of passing paper. In addition, color matching (color adjustment) is performed according to a product demanded by a customer. In addition, color adjustment is performed even during printing, or purge paper may occur after jamming. These pieces of information can be acquired via the management apparatus 11, or an operator who operates the printing apparatus 12 can input the actual results of these pieces of information into the management apparatus 11 by manual input. Therefore, the collection unit 101 acquires the consumable usage amount from the information included in the management apparatus 11.

In addition, the operation situation of the printing apparatus 12 used for printing includes, for example, a maintenance schedule or an Overall Equipment Effectiveness (OEE) of each unit of the printing apparatus 12.

The overall equipment efficiency (OEE) is an indicator calculated from a load time A (power-on time), an operating time B, a net operating time C, and a yield, and is calculated according to the following expression, for example.

Overall equipment efficiency = time operation rate $\times$ performance operation rate $\times$ yield Time operation rate = B/A

$$\text{Performance operation rate} = \text{C/B}$$

$$\text{Yield} = \text{number of OK pages/total number of printed pages}$$

The load time A includes a time during which the power of the printing apparatus 12 is turned on. The operating time B includes a value obtained by subtracting a stoppage loss from the load time A. The stoppage loss includes, for example, a failure loss, a switching adjustment loss, a jig replacement loss, and a setup loss. In addition, the cleaning inspection, the waiting for an instruction, the waiting for a material, the waiting for an assignment, the waiting for quality confirmation, the measurement adjustment, and the like may be included in the stoppage loss. The net operating time C includes the operating time B from which the performance loss is subtracted. Examples of the performance loss include an idling loss and a speed reduction loss caused due to frequent occurrences of small troubles for several seconds to several minutes. The total number of printed pages includes the sum of the number of OK pages and the number of NG pages.

The overall equipment efficiency calculated as described above is calculated by the management apparatus 11 that manages the time of the printing apparatus 12 for each of the printing unit 24 and the post-treatment unit 46. In addition, the management apparatus 11 has a maintenance schedule. Therefore, the collection unit 101 acquires the operation situation of the printing apparatus 12 from the management apparatus 11.

In addition, the worker information related to printing includes worker shift information, worker costs, required time in a case where the worker performs product manufacturing in the past, and the like.

The plan and actual results of the worker shift information are managed by the management apparatus 11, and the management apparatus 11 assigns a worker for each procedure based on the worker shift information. Since a grade corresponding to the content of the work is given to the worker, the worker costs are different depending on the grade. The cost information is managed by the management apparatus 11. Therefore, the collection unit 101 acquires the worker information related to printing from the management apparatus 11.

In addition, the outsourcing destination information related to printing includes information related to the outsourcing destination in a case where an order is placed to the outsourcing destination, costs, and the like. A printing company may outsource the processing to another company in a case where, for example, the company does not have processing equipment for paper which is equal to or larger than A3, such as special A3 (457 $\times$ 328 mm), or does not have special processing equipment for gloss lamination processing. The management apparatus 11 manages the cost taken in such a case and the outsourcing destination information. Therefore, the collection unit 101 acquires the outsourcing destination information from the management apparatus 11.

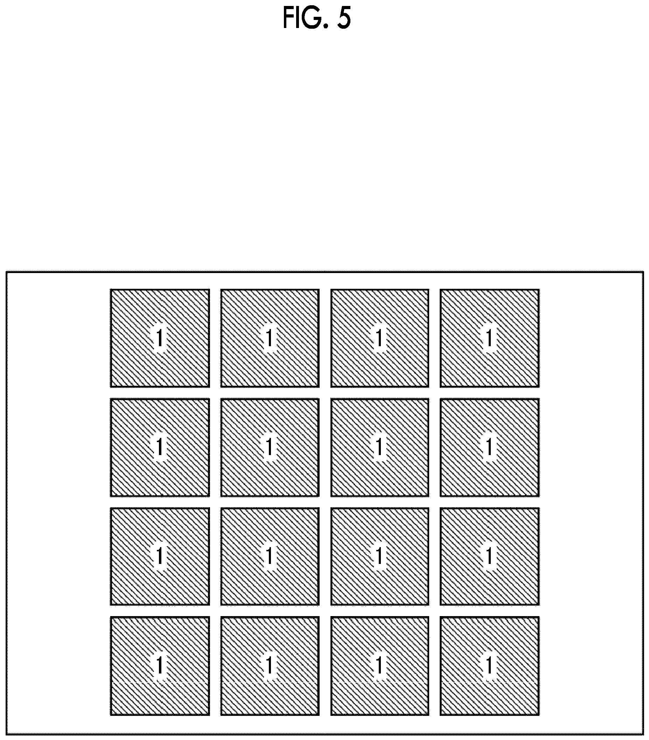

In addition, the imposition information in a case of printing includes, for example, a folding length, a page layout, a medium size, and a Breed size. Fig. 5 shows an example of the imposed paper. As shown in Fig. 5, a white portion as a discarded blank portion is generated as waste paper in a case where the paper is cut. The imposition is executed in the pre-press procedure, and the imposition information is managed by the management apparatus 11. Therefore, the collection unit 101 acquires the imposition information from the management apparatus 11.

The defect ratio in printing includes, for example, a defect ratio based on a viewpoint of each product type, each processing type, each device, and the like.

A method of inspecting the printing quality includes a visual inspection by an inspector or an inspection by an inspection device provided in the printing apparatus 12. The test results are input to the management apparatus 11. Therefore, the collection unit 101 acquires the defect ratio in printing from the management apparatus 11.

In addition, the order reception information may include information related to atmosphere in the case of printing. The information related to atmosphere includes, for example, information on a season, a temperature, a humidity, and the like.

In order to smoothly perform printing of the paper without causing the paper to be attached by static electricity, some printing companies have a printing factory where temperature and humidity are managed, and some printing companies have a factory where a humidifier, a dehumidifier, an air conditioner, and the like are placed.

The temperature and humidity information is acquired by the temperature and humidity sensor that measures the atmosphere and is input to the management apparatus 11. Therefore, the collection unit 101 collects information related to atmosphere in the case of printing from the management apparatus 11.

The cost information corresponding to the past order reception is managed in the management apparatus 11 as the historical information, and the collection unit 101 acquires the cost information from the management apparatus 11.

The cost information includes actual amount information spent in a case where the order has been received in the past, or data such as the number of sheets of the reprint, the used consumable amount, and labor costs of a worker. The actual amount information may be obtained from a difference between an amount estimated in a case of the past order reception and the actual amount.

The management apparatus 11 has history information for managing information related to order reception for printing and manufacturing information. The manufacturing information includes actual amount information in the manufacturing and the number of sheets of the reprint.

The collection unit 101 collects the amount information on printing in response to the past order reception and the number of sheets of the reprint from the history information included in the management apparatus 11.

The training data storage unit 102 stores a plurality of pieces of training data collected by the collection unit 101.

The training unit 103 constructs a neural network model for estimating cost information corresponding to the order reception information, with the order reception information as an input, based on the plurality of pieces of training data.

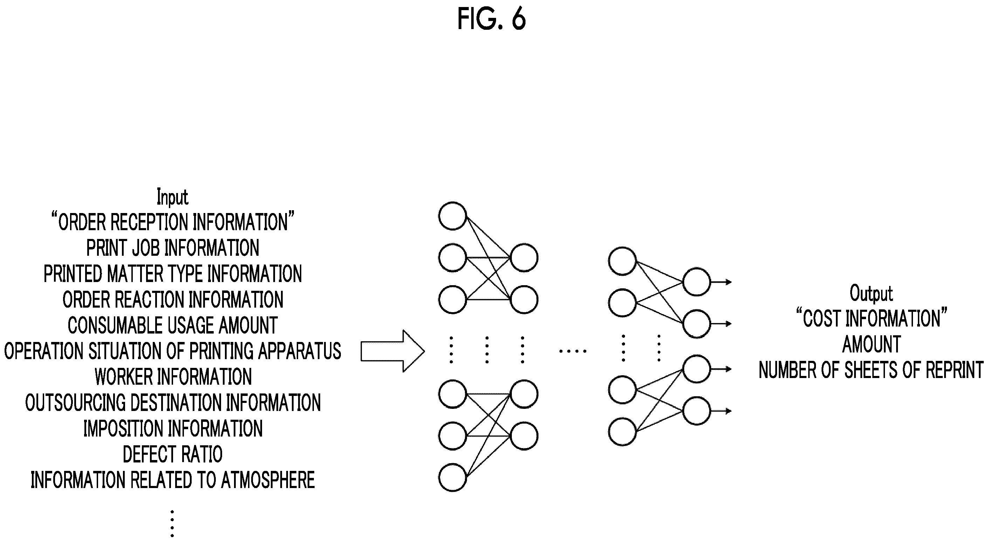

Specifically, the trained neural network model receives input of order reception information including at least one of the print job information, the printed matter type, the order reaction information, the consumable usage amount, the operation situation of the printing apparatus 12, the worker information, the outsourcing destination information, the imposition information, the defect ratio, or the atmosphere, and outputs cost information representing at least one of the amount taken for the printing corresponding to the order reception information or the number of sheets of the reprint (see Fig. 6). Deep learning can be used as an example of a training algorithm, and a neural network model may be constructed such that, in a case where the order reception information of the training data is input, the cost information of the training data is output.

More specifically, the order reception information of the training data may be used as input, the cost information may be estimated as an output of the model, the estimated cost information and the cost information of the training data may be compared with each other to calculate an error of the cost information, and the parameters of the model may be updated to minimize the value of the error.

Here, a correlation between various types of information included in the order reception information and the cost information will be described.

First, for the printed matter type included in the order reception information, the tendency of the cost and the frequency of the reprint are different for each printed matter type. For example, in a case where the printed matter type is a photo book, there is a high possibility that black spots, scratches, bleeding, and the like cause reprint, but in a case where the printed matter type is a flyer, there is a high possibility that reprint does not occur even in a case where there are some problems. As described above, there is a correlation between the printed matter type and the possibility of reprint, and thus there is also a correlation between the printed matter type and the cost information.

For the number of sheets included in the order reception information, there is a tendency that large-scale printing or small-scale printing changes depending on the number of sheets and a difference occurs in cost. In this way, there is a correlation between the number of sheets and the cost information.

In a case where, the character or tendency of each order, such as an order which tends to request the reprint without checking the printed matter after delivery, or an order which basically tends not to request the reprint by checking the delivered printed matter without change, is known in advance, it is preferable to, for example, reflect the order reaction information, which is included in the order reception information, with respect to the printing in the past order reception to the cost information by multiplying a certain coefficient in a case of estimating the cost information. As described above, there is a correlation between the order reaction information with respect to the printing in the past order reception and the cost information.

For the consumable usage amount included in the order reception information, the consumables used for a product are proportionally increased depending on the type or the number of printed matters and there are consumables, such as paper or ink for color matching, which are not included in a final product, so that the consumable usage amount may not simply proportional to the number of sheets. Therefore, for example, it is preferable to consider not only the correlation between the type of printed matters or the number of sheets and the cost information but also the correlation between the consumable usage amount and the cost information.

For the operation situation of the printing apparatus 12 included in the order reception information, the processing efficiency and the used resource amount may be different depending on the printing unit 24 or the post-treatment unit 46, and it is possible to predict where the processing is actually performed based on the operation situation, the maintenance schedule information, and the like, and to predict the cost based on the prediction. In printing, the running properties may be different depending on the type or size of paper in different printing machines or even in the identical printing machine model, and an equipment selector selects equipment having good running properties from an empirical value of a jamming rate in printing companies. In this way, the equipment selected by training the running properties in a case where a similar printed matter in the past is received can be used as a basis for cost calculation. As described above, there is a correlation between the operation situation of the printing apparatus 12 and the cost information.

For the worker information included in the order reception information, it is possible to predict a person who is likely to be in charge of the work and a time at which the work is likely to be performed, that is, the daytime, at night, or on a holiday, from worker shift information and the deadline information, and it is possible to predict the cost information after taking into consideration the labor cost of the person. As described above, there is a correlation between the worker information and the cost information.

For the outsourcing destination information included in the order reception information, it is preferable to estimate and incorporate into the cost information, for example, whether partial outsourcing is necessary in a case of creating a printed matter, where to outsource in a case where outsourcing is necessary, and how much to present in a case of requesting an estimate to the outsourcer. As described above, there is a correlation between the outsourcing destination information and the cost information.

For the imposition information in a case of printing included in the order reception information, waste paper that is not used in the product is generated due to the paper to be used, the imposition layout, and the like, and the waste paper affects the cost. As described above, there is a correlation between the imposition information in a case of printing and the cost information.

For the defect ratio included in the order reception information, for example, in a case where the defect ratio is different for each product type, each processing type, and each device, it is preferable to estimate the cost information by predicting the defect ratio in consideration of the product type, the processing type, and the device. In this way, there is a correlation between the defect ratio and the cost information.

For information related to atmosphere in a case of printing, the information being included in the order reception information, there is a possibility that the accuracy is improved in a case where there is information related to the time, the season, and the temperature or humidity for printing as information in a case of estimating the cost information in consideration of costs for printing defects and reprint. This is because, in a case where the humidity is high, a problem occurs in paper feeding, or the color development or the fixation of the toner is slightly changed. As described above, there is a correlation between the information related to atmosphere in the case of printing and the cost information.

The model storage unit 104 stores a trained neural network model.

The reception unit 105 receives order reception information related to printing to be estimated.

The order reception information includes print job information and the printed matter type. For example, the printed matter type "poster" and the number of sheets " 1000" are received.

In addition, the order reception information may include predicted order reaction information. Specifically, the information indicating, for example, whether a customer demands a strict request, whether a reprint request has been made in a past order reception, and the like, the information being obtained from the order reception and placement history information included in the management apparatus 11 is received.

In addition, the order reception information may include a predicted consumable usage amount, a predicted operation situation of the printing apparatus 12, the predicted worker information, the predicted outsourcing destination information, the estimated imposition information in the case of printing, and the predicted defect ratio.

For example, the predicted consumable usage amount, such as paper, ink, or a binding member, and the predicted consumable usage amount in a portion that does not become a product such as offset paper passing amount and paper or ink for color matching, and registration adjustment, are received.

In addition, as the predicted operation situation of the printing apparatus 12, the maintenance schedule of each of the printing unit 24 and the post-treatment unit 46, or the overall equipment efficiency predicted for each of the printing unit 24 and the post-treatment unit 46 is received.

In addition, as the predicted worker information, the cost of the worker corresponding to a worker in charge predicted from the shift information of the worker, whether a time slot of the work is in the daytime, the nighttime, or a holiday, and a required time of the work is received.

In addition, as the predicted outsourcing destination information, the information related to the outsourcing destination and the cost are received in a case where an order is placed to the outsourcing destination by predicting whether partial outsourcing is necessary in a case of creating a printed matter, where the outsourcing is requested in a case where the partial outsourcing is necessary, and how much estimation is presented in a case where an estimate request is made to the outsourcing destination.

In addition, as the predicted imposition information in a case of printing, for example, the folding length, the page layout, the medium size, the Breed size, and the like are received.

As the predicted defect ratio, for example, a defect ratio predicted based on a viewpoint of each product type, each processing type, each device, or the like is received.

In addition, the order reception information may include predicted information related to atmosphere in the case of printing. For example, as the information related to atmosphere, season or temperature and humidity information is received.

The estimation unit 106 estimates the cost information corresponding to the received order reception information by using the trained neural network model stored in the model storage unit 104.

Specifically, the various types of information included in the received order reception information are converted into a data structure (for example, a scalar value, a vector, or the like) that can be input to the trained neural network model, the data structure is input to the trained neural network model, and the cost information is estimated from the output of the trained model.

Next, specific processing performed by each part of the information processing system 10 according to the present exemplary embodiment having the above-described configuration will be described.

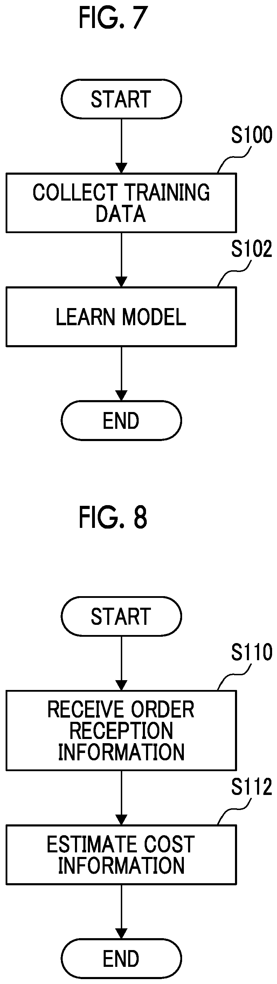

First, in the client computer 14, the CPU 14A reads out the training program from the ROM 14B or the storage 14D, and develops and executes the training program on the RAM 14C to perform a training process shown in Fig. 7.

In step S100, as the collection unit 101, the CPU 14A collects the training data including a pair of order reception information related to printing and cost information corresponding to the order reception information, and stores the training data in the training data storage unit 102.

In step S102, as the training unit 103, the CPU 14A learns the neural network model for estimating the cost information corresponding to the order reception information by using the order reception information as an input based on the plurality of pieces of training data, stores the trained neural network model in the model storage unit 104, and ends the training process.

Next, in the client computer 14, the CPU 14A reads out the estimation program from the ROM 14B or the storage 14D and develops and executes the estimation program in the RAM 14C, so that the estimation program shown in Fig. 8 is performed. In this case, it is assumed that various types of information included in the order reception information related to printing to be estimated are input.

In step S110, the CPU 14A receives the order reception information regarding the print estimation target input by the user as the reception unit 105.

In step S112, the CPU 14A estimates the cost information corresponding to the received order reception information using the trained neural network model stored in the model storage unit 104 as the estimation unit 106, and ends the estimation process. The user can present the estimated cost information to the order as an estimated amount.

By performing the process in this way, it is possible to predict the cost information in a case of receiving the order without relying on sense as compared with a case in which the trained model using the order reception information as the input is not used.

<Modification Example>

The present invention is not limited to the above-described exemplary embodiment, and various modifications and applications are possible without departing from the gist of the present invention.

For example, a case where the cost information is estimated by receiving various types of information of the order reception information has been described as an example, but the cost information may be estimated by receiving a part of the various types of information of the order reception information without receiving all of the various types of information of the order reception information.

In addition, while a case where the client computer 14 trains the model and estimates the cost information has been described as an example, the system may be configured to include a training apparatus for training the model and an estimation apparatus for estimating the cost information.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the "system" in the present exemplary embodiment is described as an example of a system configured to include a plurality of apparatus, but may be configured to include a single apparatus having a part of functions of the plurality of apparatus.

The processes executed by the printing apparatus 12 according to the above exemplary embodiment may be processes executed by software, processes executed by hardware, or a combination of both. In addition, the processes executed by the printing apparatus 12 may be stored in a storage medium as a program and distributed.

In addition, the present disclosure is not limited to the above description, and various modifications other than the above description may be made without departing from the gist thereof.

In addition, the cost information related to printing may include information related to a cost related to post-treatment.

Regarding the above exemplary embodiments, the following supplementary notes will be further disclosed.

(((1)))

An information processing system comprising:

a processor configured to, in a case where order reception information related to printing, that is, the order reception information including print job information and printed matter type information is input, input new order reception information related to new printing to a trained model which has been trained in advance in order to output cost information indicating costs regarding the printing, thereby outputting new cost information regarding printing corresponding to the new order reception information.

(((2)))

The information processing system according to (((1))),

wherein the order reception information and the new order reception information further include a consumable usage amount in the printing.

(((3)))

The information processing system according to (((1))) or (((2))),

wherein the order reception information and the new order reception information further include order reaction information with respect to printing in past order reception.

(((4)))

The information processing system according to any one of (((1))) to (((3))),

wherein the order reception information and the new order reception information further include information related to atmosphere in the case of printing.

(((5)))

The information processing system according to any one of (((1))) to (((4))),

wherein the order reception information and the new order reception information further include an operation situation of a printing apparatus used for the printing.

(((6)))

The information processing system according to any one of (((1))) to (((5))),

wherein the order reception information and the new order reception information further include worker information related to the printing.

(((7)))

The information processing system according to any one of (((1))) to (((6))),

wherein the order reception information and the new order reception information further include outsourcing destination information related to the printing.

(((8)))

The information processing system according to any one of (((1))) to (((7))),

wherein the order reception information and the new order reception information further include imposition information in the case of printing.

(((9)))

The information processing system according to any one of (((1))) to (((8))),

wherein the order reception information and the new order reception information further include a defect ratio in the printing.

(((10)))

An information processing program causing a computer to execute a process comprising:

in a case where order reception information related to printing, that is, the order reception information including print job information and printed matter type information is input, inputting new order reception information related to new printing to a trained model which has been trained in advance in order to output cost information indicating costs regarding the printing, thereby outputting new cost information regarding printing corresponding to the new order reception information.

According to (((1))), it is possible to predict the cost information estimated in a case of order reception without relying on sense.

According to(((2))), it is possible to predict the cost information based on the consumable usage amount.

According to (((3))), it is possible to predict the cost information based on the order reaction information to the printing in the past order reception.

According to (((4))), it is possible to predict the cost information based on the information related to atmosphere in the case of printing.

According to (((5))), it is possible to predict the cost information based on the operation situation of the printing apparatus.

According to (((6))), it is possible to predict the cost information based on the worker information related to printing.

According to (((7))), it is possible to predict the cost information based on the outsourcing destination information related to printing.

According to (((8))), it is possible to predict the cost information based on the imposition information in the case of printing.

According to (((9))), it is possible to predict the cost information based on the defect ratio in printing.

According to (((10))), it is possible to predict the cost information estimated in a case of order reception without relying on sense.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

10: information processing system
11: management apparatus
12: printing apparatus
14: client computer
24: printing unit
46: post-treatment unit
101: collection unit
102: training data storage unit
103: training unit
104: model storage unit
105: reception unit
106: estimation unit

**Claims**

1.    An information processing system comprising:

a processor configured to, in a case where order reception information related to printing, that is, the order reception information including print job information and printed matter type information is input, input new order reception information related to new printing to a trained model which has been trained in advance in order to output cost information indicating costs regarding the printing, thereby outputting new cost information regarding printing corresponding to the new order reception information.

2. The information processing system according to claim 1,
wherein the order reception information and the new order reception information further include a consumable usage amount in the printing.

3. The information processing system according to claim 1 or 2,
wherein the order reception information and the new order reception information further include order reaction information with respect to printing in past order reception.

4. The information processing system according to any one of claims 1 to 3,
wherein the order reception information and the new order reception information further include information related to atmosphere in the case of printing.

5. The information processing system according to any one of claims 1 to 4,
wherein the order reception information and the new order reception information further include an operation situation of a printing apparatus used for the printing.

6. The information processing system according to any one of claims 1 to 5,
wherein the order reception information and the new order reception information further include worker information related to the printing.

7. The information processing system according to any one of claims 1 to 6,
wherein the order reception information and the new order reception information further include outsourcing destination information related to the printing.

8. The information processing system according to any one of claims 1 to 7,
wherein the order reception information and the new order reception information further include imposition information in the case of printing.

9. The information processing system according to any one of claims 1 to 8,
wherein the order reception information and the new order reception information further include a defect ratio in the printing.

10. An information processing program causing a computer to execute a process comprising:
in a case where order reception information related to printing, that is, the order reception information including print job information and printed matter type information is input, inputting new order reception information related to new printing to a trained model which has been trained in advance in order to output cost information indicating costs regarding the printing, thereby outputting new cost information regarding printing corresponding to the new order reception information.

11. An information processing method comprising:
in a case where order reception information related to printing, that is, the order reception information including print job information and printed matter type information is input, inputting new order reception information related to new printing to a trained model which has been trained in advance in order to output cost information indicating costs regarding the printing, thereby outputting new cost information regarding printing corresponding to the new order reception information.

# FIG. 1

# FIG. 2

| | | | |
|---|---|---|---|
| 20 | 26 | 36 | |
| CONTROL UNIT | HDD | COMMUNICATION LINE I/F UNIT | |

42

| 28 | 30 | 34 |
|---|---|---|
| DISPLAY CONTROL UNIT | OPERATION INPUT DETECTION UNIT | PRINTING CONTROL UNIT |

USER INTERFACE

PRINTING UNIT | TRANSPORT UNIT | POST -TREATMENT UNIT

22

24 | 25 | 46

# FIG. 3

11(14)

11A(14A)   11B(14B)   11C(14C)   11D(14D)

| CPU | ROM | RAM | STORAGE |

11I(14I)

| OPERATION UNIT | DISPLAY UNIT | COMMUNICATION LINE I/F UNIT |

11E(14E)   11F(14F)   11G(14G)

# FIG. 4

14

| | |
|---|---|
| COLLECTION UNIT | 101 |
| TRAINING DATA STORAGE UNIT | 102 |
| TRAINING UNIT | 103 |
| MODEL STORAGE UNIT | 104 |
| RECEPTION UNIT | 105 |
| ESTIMATION UNIT | 106 |

## FIG. 5

FIG. 6

Input
"ORDER RECEPTION INFORMATION"
PRINT JOB INFORMATION
PRINTED MATTER TYPE INFORMATION
ORDER REACTION INFORMATION
CONSUMABLE USAGE AMOUNT
OPERATION SITUATION OF PRINTING APPARATUS
WORKER INFORMATION
OUTSOURCING DESTINATION INFORMATION
IMPOSITION INFORMATION
DEFECT RATIO
INFORMATION RELATED TO ATMOSPHERE

Output
"COST INFORMATION"
AMOUNT
NUMBER OF SHEETS OF REPRINT

EP 4 614 422 A1

# FIG. 7

```
        START

          │
          ▼                    S100
┌─────────────────────┐
│   COLLECT TRAINING  │
│        DATA         │
└─────────────────────┘
          │
          ▼                    S102
┌─────────────────────┐
│     LEARN MODEL     │
└─────────────────────┘
          │
          ▼
         END
```

# FIG. 8

```
        START

          │
          ▼                    S110
┌─────────────────────┐
│   RECEIVE ORDER     │
│     RECEPTION       │
│    INFORMATION      │
└─────────────────────┘
          │
          ▼                    S112
┌─────────────────────┐
│   ESTIMATE COST     │
│    INFORMATION      │
└─────────────────────┘
          │
          ▼
         END
```

Europäisches
Patentamt

European
Patent Office

Office européen
des brevets

## EUROPEAN SEARCH REPORT

**Application Number**

EP 24 18 9726

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/356328 A1 (CHRISTY P J; KEYES G T) 12 November 2020 (2020-11-12) * abstract; claims 1-20; figures 1-4 * * paragraphs [0004], [0005], [0011] - [0067] * | 1-11 | INV. G06Q30/0283 G06F3/12 |
| X | US 2013/346259 A1 (DONALD I F; FERNANDES D; FERNANDES D I; LAKSHANA P; PANT L) 26 December 2013 (2013-12-26) * abstract; figures 1-9 * * paragraphs [0015] - [0039] * | 1-11 | |
| X | US 2016/277631 A1 (MORI KEISUKE [JP]) 22 September 2016 (2016-09-22) * abstract; claims 1-19; figures 1-24 * * paragraphs [0010], [0011], [0121] - [0247] * | 1-11 | |
| X | CN 115 362 432 A (BROTHER IND LTD) 18 November 2022 (2022-11-18) * abstract; figures 1-10 * * paragraphs [0008] - [0017], [0062] - [0130] * | 1-11 | |

|  |
|---|
| **TECHNICAL FIELDS SEARCHED (IPC)** |
| G06Q G06F |

The present search report has been drawn up for all claims

| Place of search | Date of completion of the search | Examiner |
|---|---|---|
| The Hague | 8 August 2024 | Streit, Stefan |

EPO FORM 1503 03.82 (P04C01)

## ANNEX TO THE EUROPEAN SEARCH REPORT
## ON EUROPEAN PATENT APPLICATION NO.

EP 24 18 9726

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2024

| Patent document cited in search report | Publication date | Patent family member(s) | | Publication date |
|---|---|---|---|---|
| US 2020356328 A1 | 12-11-2020 | NONE | | |
| US 2013346259 A1 | 26-12-2013 | NONE | | |
| US 2016277631 A1 | 22-09-2016 | CN | 105988756 A | 05-10-2016 |
| | | EP | 3070595 A1 | 21-09-2016 |
| | | JP | 6500530 B2 | 17-04-2019 |
| | | JP | 2016177372 A | 06-10-2016 |
| | | US | 2016277631 A1 | 22-09-2016 |
| CN 115362432 A | 18-11-2022 | CN | 115362432 A | 18-11-2022 |
| | | JP | 7465442 B2 | 11-04-2024 |
| | | JP | 2021163251 A | 11-10-2021 |
| | | US | 2023014099 A1 | 19-01-2023 |
| | | WO | 2021200109 A1 | 07-10-2021 |

For more details about this annex : see Official Journal of the European Patent Office, No. 12/82

# EP 4 614 422 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021026535 A